# EUROPEAN PATENT APPLICATION

(11) **EP 2 325 798 A2**
(43) Date of publication of application: **25.05.2011**
(21) Application number: 09800548.1
(22) Date of filing: 20.07.2009
(51) Int. Cl.: G06Q 50/00

(54) **APPARATUS AND METHOD FOR INTER-OPERATION BETWEEN VIRTUAL REALITY SERVICES**

(30) Priority: 21.07.2008 KR 20080070789
(71) Applicant: Samsung Electronics Co., Ltd., Suwon-si, Gyeonggi-do 442-742 (KR)
(72) Inventor: CHO, Seong-Ho, Yongin-si Gyeonggi-do 446-712 (KR); LEE, Joo-Yeol, Yongin-si Gyeonggi-do 446-712 (KR)
(74) Representative: Grünecker, Kinkeldey, Stockmair & Schwanhäusser Anwaltssozietät
(86) International application number: PCT/KR2009/003998
(87) International publication number: WO 2010/011067

(57) **Abstract**

Provided are an apparatus and a method for inter-operation between virtual reality services to present a new model for the provision of inter-operation when using various virtual reality services and to enable a user to use the virtual reality services conveniently through the new model. According to the embodiment of the present invention, a virtual reality server for inter-operation between virtual reality services comprises: a log-in server that authenticates a user, a messenger server that manages the messaging session information of the user, a space server that manages an object in peripheral space depending on the location of the user, a data server that processes queries for data about users, an inventory, location information and a log, a simulator server that analyzes and calculates a physical value depending on the movement of the user, and a pre-processing module that performs transformation to share the virtual reality services with another virtual reality server or a user client device.

## Description

### FIELD OF THE INVENTION

Apparatus and methods consistent with the present invention relate to virtual reality services, and more particularly, to inter-operation of virtual reality services.

### BACKGROUDN OF THE INVENTION

Virtual reality denotes an interface between a human being and a computer, wherein through use of the interface, a specific environment or situation is created using a computer and a person using the computer feels as if he/she is interacting with a real situation or environment.

Virtual reality is also known as artificial reality, cyberspace, virtual worlds, virtual environment, synthetic environment, and artificial environment.

One purpose of using virtual reality is to allow people to enter into an environment which they could hardly ever experience, without actually requiring them to actually experience it. Examples of application fields include education, advanced programming, remote operations, remote satellite sensing, investigated material analysis, and scientific visualization.

More specifically, operational training for tanks and aircraft, designing furniture arrangement, practice for medical surgery, and games may also be included as application fields. In a virtual reality system, human participants and virtual work space are connected to each other by hardware. The virtual reality system allows the participants to sense incidents occurring in the virtual environment mainly by the sense of sight while the senses of hearing and touch are complementarily used.

Virtual reality systems may sense a visual point or motion changes of users and give appropriate changes corresponding to the sensed changes to the virtual environment. Also, effectors such as a three-dimensional display device and a head-mounted display device are used to increase realism for the users and sensors such as a data glove and a head location sensor are used to sense reactions of the users.

Related art virtual reality systems are run by virtually forming a single world and forming a server or server groups, thereby providing services to the users. Service or interaction services between the users in one virtual reality service are provided. However, services for inter-operation by sharing a plurality of virtual reality services are not provided.

### BRIEF DESCRIPTION OF THE DRAWINGS

FIG. 1 illustrates a configuration of an inter-operation service of multi-virtual reality services according to an exemplary embodiment of the present invention;

FIG. 2 illustrates inter-operation between a heterogeneous server and a heterogeneous client according to an exemplary embodiment of the present invention;

FIG. 3 illustrates inter-operation between a heterogeneous server and a virtual client according to an exemplary embodiment of the present invention;

FIG. 4 illustrates inter-operation between a heterogeneous server and a common client according to an exemplary embodiment of the present invention;

FIG. 5 illustrates transferring avatar and user information in an inter-operation system between virtual reality services according to an exemplary embodiment of the present invention;

FIG. 6 illustrates sending and sharing an object in an inter-operation system between virtual reality services according to an exemplary embodiment of the present invention;

FIG. 7 illustrates exchanging a message by users in an inter-operation system between virtual reality services according to an exemplary embodiment of the present invention;

FIG. 8 illustrates moving from one virtual reality service to another neighboring virtual reality service in an inter-operation system between virtual reality services according to an exemplary embodiment of the present invention;

FIG. 9 illustrates sharing an avatar using an avatar server between virtual reality services in an inter-operation system between virtual reality services according to an exemplary embodiment of the present invention;

FIG. 10 illustrates registering user information and avatar information to a public user server and reusing information in other virtual reality services according to an exemplary embodiment of the present invention;

FIG. 11 is a block diagram illustrating a pre-processing module included in a virtual reality client device in an inter-operation system between virtual reality services according to an exemplary embodiment of the present invention; and

FIG. 12 is a block diagram illustrating a pre-processing module included in a virtual reality server in an inter-operation system between virtual reality services according to an exemplary embodiment of the present invention.

### SUMMARY OF THE INVENTION

### TECHNICAL PROBLEM

The present invention provide an apparatus and a method for inter-operation between virtual reality services to present a new model for the provision of interoperability when using various virtual reality services and to enable a user to use the virtual reality services conveniently through the new model.

### TECHNICAL SOLUTION

According to an aspect of the present invention, there is provided a virtual reality server for inter-operation between virtual reality services, the virtual reality server including: a log-in server that authenticates a user; a messenger server that manages the messaging session information of the user; a space server that manages an object in peripheral space depending on the location of the user; a data server which processes queries about database information about user information, an inventory, log, and location information; a simulator server that analyzes and calculates a physical value depending on the movement of the user; and a pre-processing module that performs transformation to share the virtual reality services with another virtual reality server or a user client device.

The present invention provides a new model for the provision of interoperability when using various virtual reality services.

### ADVANTAGEOUS EFFECTS

Various models for providing inter-operation services between the virtual reality services are suggested, and the elements (service modules) of these models and protocols are used to provide services through previously used client services or common client software that is newly formed. Also, services for sharing information such as an ID and avatar are provided so that the user can uniformly represent their own identity in the virtual reality services.

### BEST MODE

According to an aspect of the present invention, there is provided a virtual reality server for inter-operation between virtual reality services, the virtual reality server incluidng: a log-in server that authenticates a user; a messenger server that manages the messaging session information of the user; a space server that manages an object in peripheral space depending on the location of the user; a data server which processes queries about database information about user information, an inventory, log, and location information; a simulator server that analyzes and calculates a physical value depending on the movement of the user; and a pre-processing module that performs transformation to share the virtual reality services with another virtual reality server or a user client device.

One or more exemplary embodiments of the present invention provide a computer readable recording medium having recorded thereon a computer program for executing the method for inter-operation between virtual reality services in a computer.

The pre-processing module may provide protocols for exchanging information with the other virtual reality server.

The pre-processing module may include: a user authentication module which performs user authentication with the other virtual reality server; an instant messenger (IM) module which translates messaging session information of the user; a logging module which allows the user to log in; an inventory exchange module which exchanges an inventory of the user with other virtual reality server; a scene/object translation module which translates a scene or an object in a virtual reality; and a communication module which communicates with another user of the other virtual reality server.

According to another aspect of the present invention, there is provided a virtual reality client device for inter-operation between virtual reality services, the device including:; a data processor which processes information received from a database of virtual reality servers; a renderer which processes and represents graphic related information; an instant messenger (IM) server which performs messenger service; and a pre-processing module which performs transformation for sharing the virtual reality services with the virtual reality servers or another virtual reality client device.

The pre-processing module may provide protocols for exchanging information with the virtual reality servers or other virtual reality client devices.

The pre-processing module may include: a user information module which stores information of a user of the virtual reality client device; an IM translation module which translates messaging session information of the user; a logging module through which the user logs in; an inventory management module which manages an inventory of the user w; a scene/object translation module which translates a scene or an object in a virtual reality; and a communication module which communicates with the other virtual reality client device.

According to another aspect of the present invention, there is provided a method for inter-operation between virtual reality services, the method including: performing mutual authentication between a first server and a second server from among a plurality of virtual reality servers providing virtual reality services that are different from each other; requesting, by the second server, information of a first user from the first server; receiving, by the second server, information of the first user from the first server; and authenticating the first user as a user for sharing the virtual reality services in the first server using the information of the first user in the second server.

The method may further include: receiving, in the first server from the second server, avatar information used in the second server by the first user; transforming, in the first server, graphic information of the avatar so as to suit the virtual reality services provided by the first server; and transmitting, from the first server to the first user, the avatar information including the transformed graphic information.

The method may further include: receiving, in the first server from the second server, information of an object used in the second server; transforming, in the first server, the object to represent graphic information in the virtual reality services provided by the first server; and transmitting, from the first server to the first user, the object information including the transformed object.

The method may further include: receiving, in the first server from the second server, a message, voice, a moving picture, or data from a second user who uses the second server; and transmitting, from the first server to the first user, the message, voice, moving picture, or data from the second user.

The method may further include: receiving, in the second server, a request from the second user to the first user who uses the first server for transmitting a message, voice, moving picture, or data; requesting, from the second server to the first server, information of the first user; receiving, in the second server from the first server, the information of the first user; and transmitting the message, voice, moving picture, or data requested by the second user to the second server using the information of the first user.

According to another aspect of the present invention, there is provided a method for inter-operation between virtual reality services, the method including: logging in a first server, one of a plurality of virtual reality servers in a client device of a first user using the plurality of virtual reality servers providing virtual reality services that are different from each other; and transmitting information of the first user to the first server in the client device so as for the first server to authenticate a second server, one of the plurality of virtual reality servers, and the first user.

The method may further include: transmitting a message, voice, moving picture, or data sent from a second user who uses the second server to the first server in the client device.

The method may further include: receiving information of another user who uses the second server from the first server in the client device; and directly transmitting the message, voice, moving picture, or data to the client device of the other user using the information of the other user in the client device.

### DETAILED DESCRIPTION OF THE EXEMPLARY EMBODIMENTS

Reference will now be made in detail to exemplary embodiments, examples of which are illustrated in the accompanying drawings, wherein like reference numerals refer to the like elements throughout. In this regard, the present invention may be embodied in many different forms and should not be construed as being limited to the exemplary embodiments set forth herein. Accordingly, exemplary embodiments are merely described below, by referring to the figures, to explain aspects of the present invention.

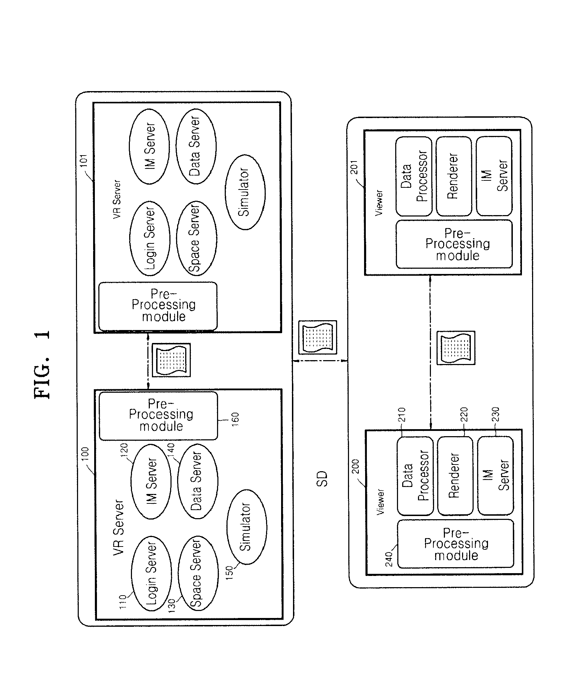

FIG. 1 illustrates a configuration of an inter-operation service of multi-virtual reality services according to an exemplary embodiment of the present invention.

Referring to FIG. 1, in inter-operation between the virtual reality services according to the current exemplary embodiment, an information exchange protocol between a virtual reality server 100 and a virtual reality server 101, the virtual reality servers 100 and 101 and virtual reality client devices 200 and 201, or the virtual reality client device 200 and the virtual reality client device 201 is provided.

A virtual reality system virtually forms a single world and is run by forming servers or server groups, thereby providing service to a user.

The virtual reality system as illustrated in FIG. 1 provides virtual reality services as follows.

First, the virtual reality client devices 200 and 201 at a user side transmit user authentication information to the virtual reality servers 100 and 101. The virtual reality servers 100 and 101 confirm the user and then provide virtual reality services to the user. When the virtual reality services are initiated, the virtual reality servers 100 and 101 provide an initial location, map information relating to the location, a user's avatar, an inventory, and a login friend list. The user inputs information using an input device such as a user's keyboard, a touch screen, and a motion sensor or by changing a gaze direction (position). The virtual reality client devices 200 and 201 transmit input information to the virtual reality servers 100 and 101. The virtual reality servers 100 and 101 change the user's location or gaze direction (position) in a virtual reality space based on the transmitted information and calculate changed object or location information of other user based on the changed location or gaze direction (position), thereby providing virtual reality service to the virtual reality client devices 200 and 201. The virtual reality client devices 200 and 201 display the changed object or the other user's location on a user screen based on the transmitted information. The user may provide a message, voice, moving image, and data to users around the current location or users in registered groups through the virtual reality client devices 200 and 201. Such message, voice, moving image, and data may be provided via the virtual reality servers 100 and 101 or may be directly transmitted to the virtual reality client devices 200 and 201 of users who have confirmed their location.

The virtual reality server 100 illustrated in FIG. 1 includes a login server 110, an instant messenger (IM) server 120, a space server 130, a data server 140, a simulator server 150, and a pre-processing module 160.

The login server 110 authenticates a user. The IM server 120 manages messaging session information of the user. The space server 130 manages objects in peripheral space depending on the location of the user. The data server 140 processes queries about database information such as user information, an inventory, log, and location information. The simulator server 150 analyzes and calculates physical value depending on movement of the user. The pre-processing module 160 performs transformation to share virtual reality services with the other virtual reality server 101 or the virtual reality client devices 200 and 201.

The virtual reality client device 200 illustrated in FIG. 1 according to the current exemplary embodiment acquires information about a virtual space from the virtual reality servers 100 and 101 through a communication channel in the virtual reality system and provides user's desired functions. The virtual reality client device 200 includes an event handler (not shown), a data processor 210, a renderer 220, an IM server 230, and a pre-processing module 240.

The event handler processes a user input. The data processor 210 processes information received from a database (not shown) of the virtual reality servers 100 and 101. The renderer 220 processes and represents graphic related information. The IM server 230 performs messenger service. The pre-processing module 240 performs transformation to share virtual reality services with the other virtual reality client device 201 or the virtual reality servers 100 and 101.

In the exemplary embodiments of the present invention, a method of using an inter-operation service between the virtual reality services, and newly formed virtual reality service inter-operation models are provided. Each of the service models has different enabled services and programs required by clients.

In the exemplary embodiments of the present invention, service models as follows can be provided.

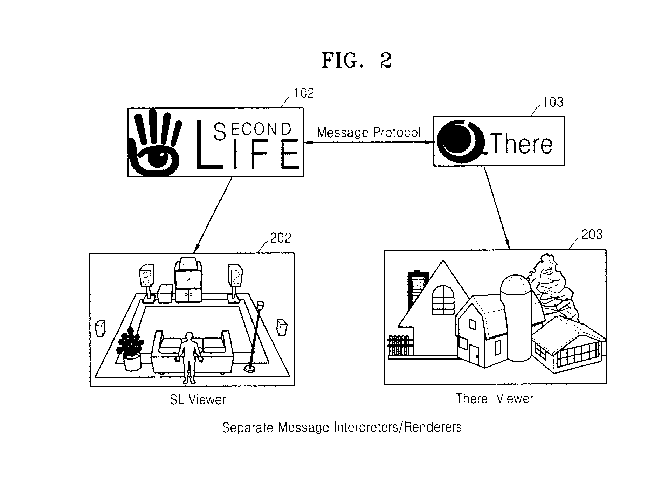

Inter-operation between a heterogeneous server and a heterogeneous client (FIG. 2)

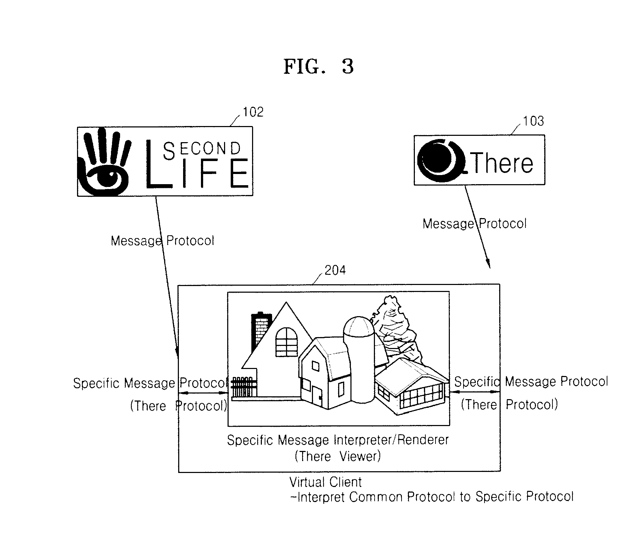

2. Inter-operation between a heterogeneous server and a virtual client (FIG. 3)

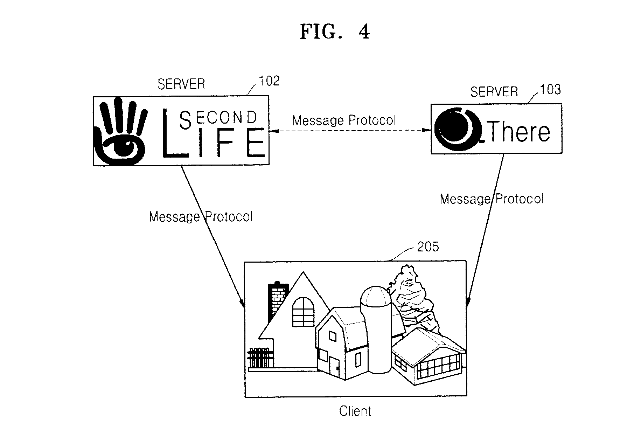

3. Inter-operation between a heterogeneous server and a common client (FIG. 4)

4. Protocols and messages for mutual information communication, which may include the following:

Protocol for information communication between a server and a client, a common message relating to information communication between a server and a client, exchanging services which enable to be provided between a server and a client and confirmation of a list of enabled services, protocol for mutual information communication between servers, a common message relating to information communication between servers, exchanging services which are enabled to be provided between servers and confirmation of a list of enabled services, and confirmation of a user in other server and transmitting a message (transmission through servers or clients).

Figures as described below illustrate virtual reality services for environments known as "Second Life" and "There." However, these services are only examples for convenience of description and it is obvious to one of ordinary skill in the art that a method and apparatus for inter-operation between virtual reality services according to the present invention can be applied to other virtual reality services as in the same manner or by being modified.

Referring to FIG. 2, services that are different from each other respectively have virtual reality servers 102 and 103 that are different from each other and respectively have virtual reality clients 202 and 203 that are different from each other. In FIG. 2, a user may share an avatar between virtual realities or may transmit an object such as an item or a message, voice, moving image, and data to other users of the virtual reality services that are different from each other. Here, the user confirms users being in other servers through communication between the virtual reality servers 102 and 103 and transmits the object and message. In this case, each piece of data may be transmitted through the virtual reality servers 102 and 103 or may be directly transmitted to the virtual reality clients 202 and 203.

Referring to FIG. 3, a virtual client 204 is present so as to connect with various virtual reality services. The virtual client is denoted as a virtual reality client having a 3D engine which can represent all virtual reality services that are different from each other.

The virtual reality servers 102 and 103 transmit information which enables the realization of a virtual reality to be displayed to the virtual client 204. The protocol between the virtual reality servers 102 and 103 and the virtual client 204 may use a method of (1) transmitting using protocol that is standardized between the virtual reality servers 102 and 103 and the virtual client 204, (2) converting previously used protocol into an interpretable message protocol by the virtual client 204, when the virtual reality servers 102 and 103 transmit this protocol to the virtual client 204, and (3) by converting the virtual reality servers 102 and 103 into protocol of the virtual client 204.

A user may share an avatar between the virtual realities or may transmit an object such as an item or a message, voice, moving image, and data to other users of the virtual reality services that are different from each other. In addition, the user may move space between the virtual reality services that are different from each other or may represent spaces of the virtual reality services that are different from each other from one viewer.

Referring to FIG. 4, a common client 205 is used to connect to various virtual reality services in the virtual reality services that are different from each other. In FIG. 4, the common client 205 and the virtual reality servers 102 and 103 have a common 3D engine and share a communication protocol. A user may share an avatar between the virtual realities that are different from each other or may transmit an object such as an item or a message, voice, moving image, and data to other users of the virtual reality services. In addition, the user may move a space between the virtual reality services that are different from each other or may represent a plurality of virtual reality services at the same time.

According to another exemplary embodiment, provided is a method of sharing information capable of representing an identity of a user in a virtual space such as an avatar to thus represent the same virtual identity. Accordingly, information capable of representing the identity of the user such as an identifier (ID) or an avatar is obtained from a public server or the virtual reality services to which the user previously joined so as to be used, and a method of storing changed information to the public server or the virtual reality services from which the information is obtained may be provided. Here, the following elements and interconnection protocol are needed.

1. A server storing and providing avatar information

2. A converting service for representing avatar information

3. Protocols and messages for mutual information communication, which may include the following:

Protocol for avatar information communication between an avatar server and a client, protocol for avatar information communication between virtual reality servers, and protocol for avatar information communication between an avatar server and a virtual reality server.

In the exemplary embodiments of the present invention, in order to represent a single identity by a user, a service for sharing relating information which is an ID and/or avatar in various virtual reality services is provided in using elements, protocols, and various virtual reality services.

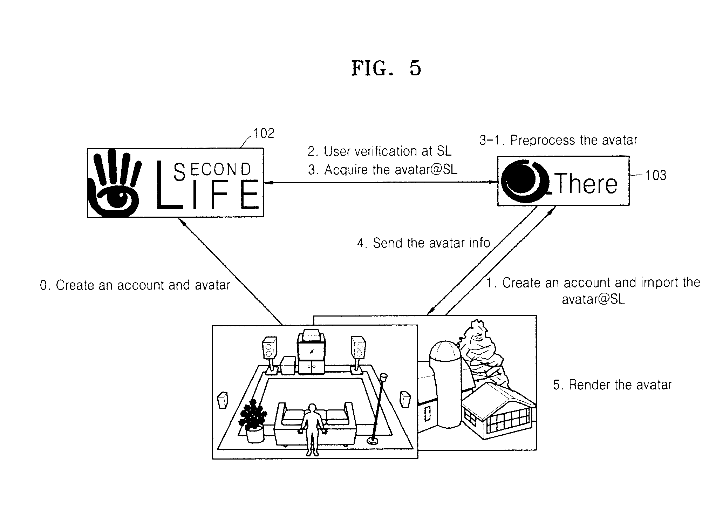

FIG. 5 illustrates transferring avatar and user information in an inter-operation system between virtual reality services according to an exemplary embodiment of the present invention.

Referring to FIG. 5, a user brings avatar information of a previously joined virtual reality service (reference numeral 0 in FIG. 5) and generates an avatar of a virtual reality service to be newly used (reference numeral 1 in FIG. 5). Mutual authentication between the virtual reality servers 102 and 103 and user authentication (reference numeral 2 in FIG. 5) are performed and user information and avatar information are exchanged (reference numeral 3 in FIG. 5). The new virtual reality server 103 transforms graphic information of the avatar so as to suit a system in which it is to be newly used (reference numeral 3-1 in FIG. 5), provides a previously used avatar to the virtual reality client so as to be used consistently by the user (reference numeral 4 in FIG. 5), and the client renders the avatar (reference numeral 5 in FIG. 5).

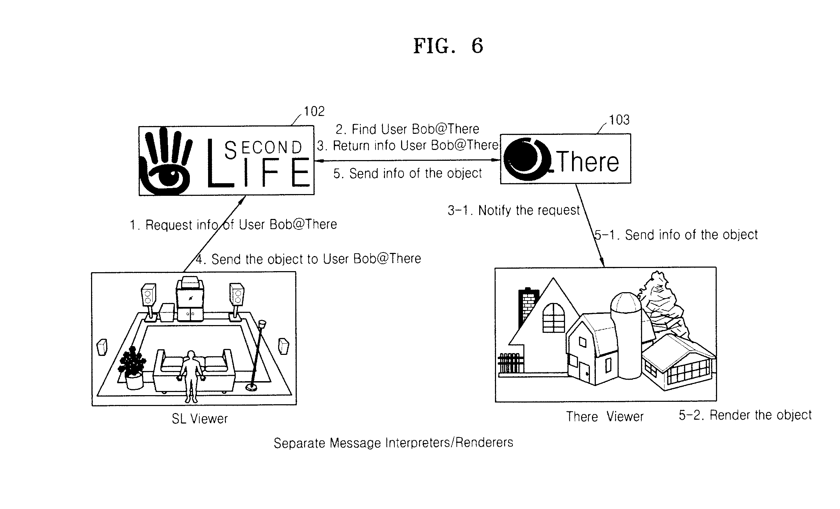

FIG. 6 illustrates sending and sharing of an object in an inter-operation system between virtual reality services according to an exemplary embodiment of the present invention.

Referring to FIG. 6, the sending and sharing of an object between the virtual reality services that are different to each other and protocols needed in these operations are illustrated. After mutual authentication between the virtual reality servers 102 and 103, preprocessing is performed through which user authentication and user information are provided (reference numerals 1, 2 and 3 in FIG. 6), information about the object is shared between the virtual reality servers 102 and 103 (reference numerals 3-1, 4, 5 and 5-1 in FIG. 6), and the object is transformed to represent graphic information in the system receiving the corresponding object so as to provide a service for sharing the object between the virtual reality services (reference numeral 5-2 in FIG. 6).

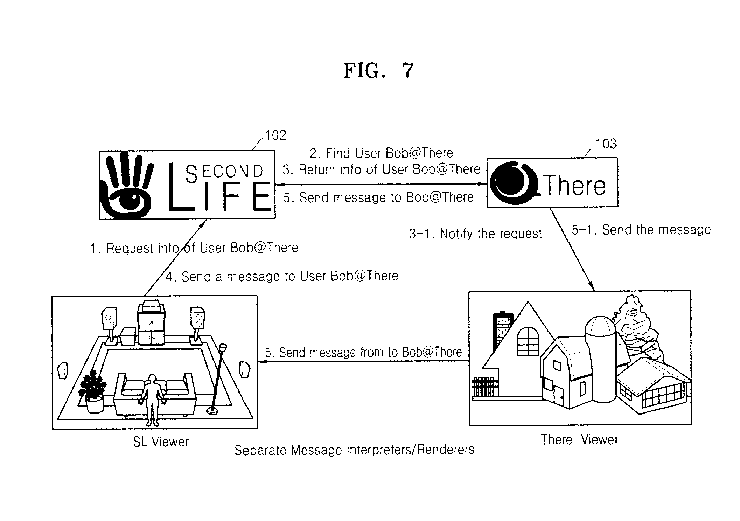

FIG. 7 illustrates exchanging of a message by users in an inter-operation system between virtual reality services according to an exemplary embodiment of the present invention.

Referring to FIG. 7, in order to share a message, voice, a moving picture, or data between the users who use the virtual reality services that are different from each other, authentication of user information is required after mutual authentication between the virtual reality servers 102 and 103 is performed (reference numerals 1, 2 and 3 in FIG. 7), information on user login is provided, and services and protocols for transmitting a message, voice, a moving picture, and data through servers or directly between the authenticated users are provided (reference numerals 3-1, 4, 5 and 5-1 in FIG. 7).

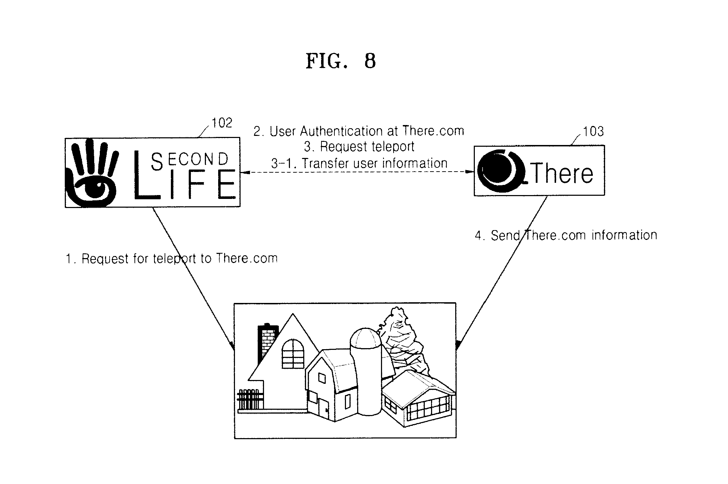

FIG. 8 illustrates moving from one virtual reality service to another neighboring virtual reality service in an inter-operation system between virtual reality services according to an exemplary embodiment of the present invention.

Referring to FIG. 8, when the user moves from a virtual reality service provided by one virtual reality client to another virtual reality service (this is known as "teleport"), user authentication information is exchanged after mutual authentication between the virtual reality servers 102 and 103 (reference numeral 2 in FIG. 8), information about authenticated user ID and avatar is exchanged, location information and graphic information about newly logged in virtual reality service are transmitted to the user so as to provide protocols needed in a service for moving to another virtual reality service (reference numerals 3, 3-1 and 4 in FIG. 8).

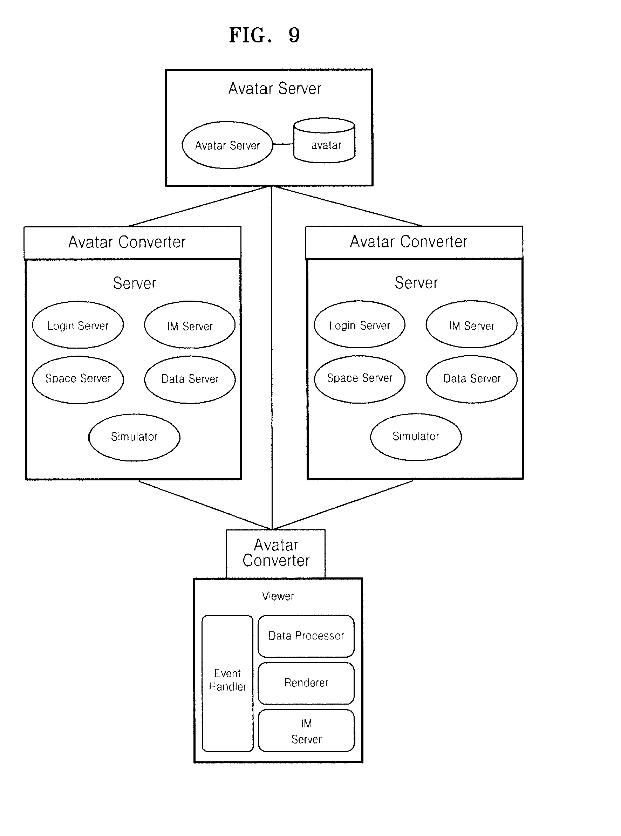

FIG. 9 illustrates sharing avatar using an avatar server between virtual reality services in an inter-operation system between virtual reality services according to an exemplary embodiment of the present invention.

Referring to FIG. 9, a service for sharing information, such as an ID and avatar which can represent a user's identity, between the virtual reality services is illustrated. When the ID and avatar are stored in a public server, the user may share authentication information and avatar information or avatar information between the virtual reality services, if needed, or may selectively acquire information required in the corresponding virtual reality services. Also, changes occurring in the client can be stored in the server. In addition, when avatar information is acquired from the previously joined virtual reality services, authentication information and avatar information may be shared between the virtual reality services in the similar manner as above and information required in the corresponding virtual reality services can be selectively acquired. Moreover, changes occurring in the client can be stored in the server.

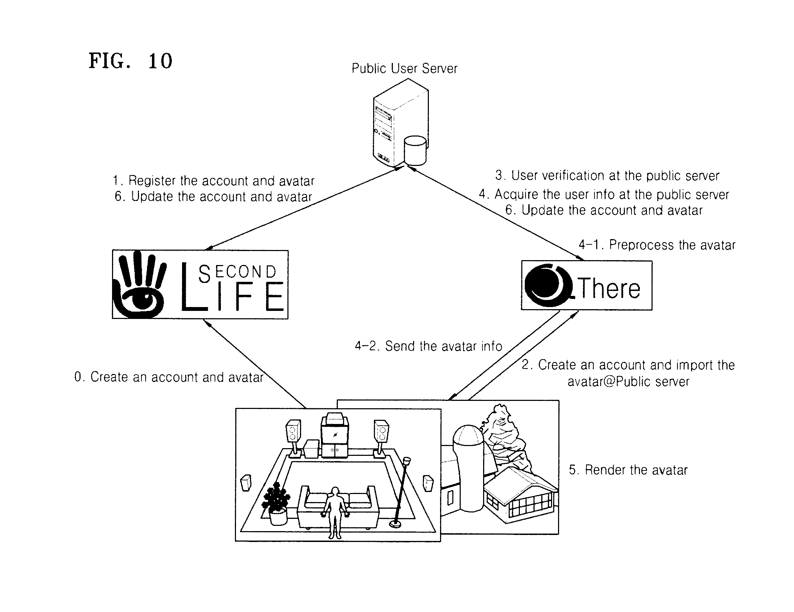

FIG. 10 illustrates registering of user information and avatar information to a public user server using the system of FIG. 9 and reusing information in other virtual reality services according to an exemplary embodiment of the present invention.

Referring to FIG. 10, the user registers his/her own ID and avatar information to a common server after authentication (reference numerals 0, 1 and 2 in FIG. 10), changed information is updated (reference numeral 6 in FIG. 10), the user ID and avatar information registered to the common server is acquired in other virtual reality services after authentication (reference numerals 3 and 4 in FIG. 10), and the acquired information is preprocessed (reference numeral 4-1 in FIG. 10) so that the user may use a previously used identity in a new virtual reality service (reference numerals 4-2 and 5 in FIG. 10).

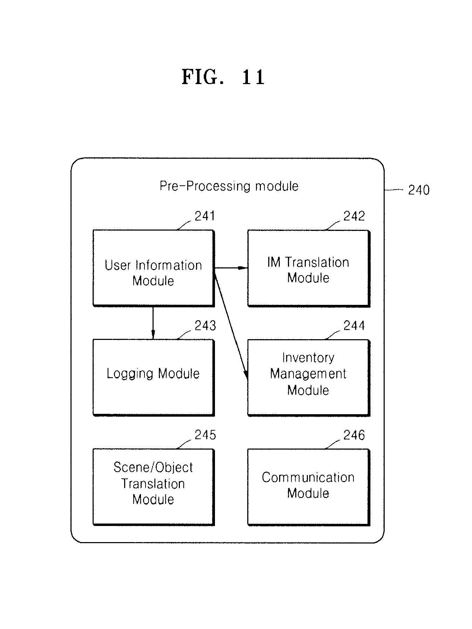

FIG. 11 is a block diagram illustrating a pre-processing module 240 included in the virtual reality client device 200 of FIG. 1 in an inter-operation system between virtual reality services according to an exemplary embodiment of the present invention.

Referring to FIG. 11, the pre-processing module 240 includes a user information module 241, an IM translation module 242, a logging module 243, an inventory management module 244, a scene/object translation module 245, and a communication module 246.

The user information module 241 stores information about a user of the virtual reality client device 200 of FIG. 1. The IM translation module 242 translates messaging session information of the user. The logging module 243 allows the user to log in. The inventory management module 244 manages an inventory of the user. The scene/object translation module 245 translates a scene or an object in the virtual reality. The communication module 246 communicates with other virtual reality client devices.

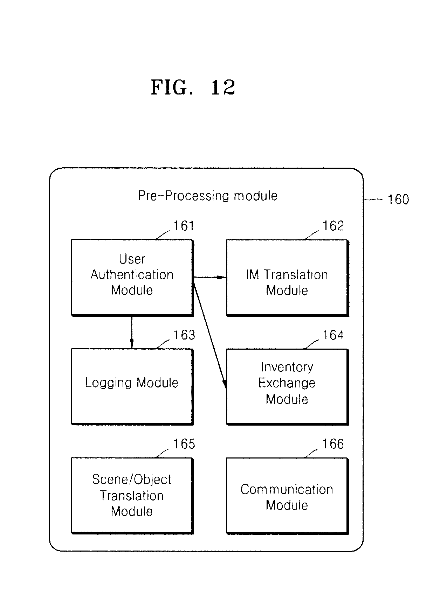

FIG. 12 is a block diagram illustrating a pre-processing module 160 included in the virtual reality server 100 of FIG. 1 in an inter-operation system between virtual reality services according to an exemplary embodiment of the present invention.

Referring to FIG. 12, the pre-processing module 160 includes a user authentication module 161, an IM translation module 162, a logging module 163, an inventory exchange module 164, a scene/object translation module 165, and a communication module 166.

The user authentication module 161 performs user authentication with another virtual reality server (for example, virtual reality server 101 in FIG. 1). The IM translation module 162 translates messaging session information of the user. The logging module 163 allows the user to log in. The inventory exchange module 164 exchanges an inventory of the user with the other virtual reality server 101 of FIG. 1. The scene/object translation module 165 translates a scene or an object in the virtual reality. The communication module 166 communicates with the other user of the virtual reality server 101 of FIG. 1.

As described above, according to the one or more of the above exemplary embodiments, various models for providing inter-operation services between the virtual reality services are suggested, and the elements (service modules) of these models and protocols are used to provide services through previously used client services or common client software that is newly formed. Also, services for sharing information such as an ID and avatar are provided so that the user can uniformly represent their own identity in the virtual reality services.

The invention can also be embodied as computer readable codes recorded on a computer readable recording medium (including all devices having information processing functions). The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices.

While aspects of the present invention have been particularly shown and described with reference to differing exemplary embodiments thereof, it should be understood that these exemplary embodiments should be considered in a descriptive sense only and not for purposes of limitation. Descriptions of features or aspects within each exemplary embodiment should typically be considered as available for other similar features or aspects in the remaining exemplary embodiments.

Thus, although a few exemplary embodiments have been shown and described, it would be appreciated by those of ordinary skill in the art that changes may be made in these exemplary embodiments without departing from the principles and spirit of the invention, the scope of which is defined in the claims and their equivalents.

## Claims

1. A virtual reality server for inter-operation between virtual reality services, the virtual reality server comprising:
a log-in server that authenticates a user;
a messenger server that manages the messaging session information of the user;
a space server that manages an object in peripheral space depending on the location of the user;
a data server which processes queries about database information about user information, an inventory, log, and location information;
a simulator server that analyzes and calculates a physical value depending on the movement of the user; and
a pre-processing module that performs transformation to share the virtual reality services with another virtual reality server or a user client device.

2. The virtual reality server of claim 1, wherein the pre-processing module provides protocols for exchanging information with the other virtual reality server.

3. The virtual reality server of claim 2, wherein the pre-processing module comprises:
a user authentication module that performs user authentication with the other virtual reality server;
an instant messenger (IM) translation module that translates messaging session information of the user;
a logging module that allows the user to log in;
an inventory exchange module that exchanges an inventory of the user with the other virtual reality server;
a scene/object translation module that translates a scene or an object in a virtual reality; and
a communication module that communicates with another user of the other virtual reality server.

4. A virtual reality client device for inter-operation between virtual reality services, the device comprising:
an event handler that processes a user input;
a data processor that processes information received from a database of virtual reality servers;
a renderer that processes and represents graphic related information;
an instant messenger (IM) server that performs messenger service; and
a pre-processing module that per forms transformation to share the virtual reality services with the virtual reality servers or another virtual reality client device.

5. The device of claim 4, wherein the pre-processing module provides protocols for exchanging information with the virtual reality servers or the other virtual reality client devices.

6. The device of claim 5, wherein the pre-processing module comprises:
a user information module that stores information of a user of the virtual reality client device;
an IM translation module that translates messaging session information of the user;
a logging module through which the user logs in;
an inventory management module that manages an inventory of the user;
a scene or object translation module that translates a scene or an object in a virtual reality; and
a communication module that communicates with the other virtual reality client device.

7. A method for inter-operation between virtual reality services, the method comprising:
performing mutual authentication between a first server and a second server from among a plurality of virtual reality servers providing virtual reality services that are different from each other;
requesting, by the second server, information of a first user from the first server;
receiving, by the second server, information of the first user from the first server; and
authenticating the first user as a user for sharing the virtual reality services in the first server using the information of the first user in the second server.

8. The method of claim 7, further comprising:
receiving, at the first server from the second server, avatar information used in the second server by the first user;
transforming, at the first server, graphic information of the avatar so as to suit the virtual reality services provided by the first server; and
transmitting, from the first server to the first user, the avatar information including the transformed graphic information.

9. The method of claim 7, further comprising:
receiving, at the first server from the second server, information of an object used in the second server;
transforming, at the first server, the object to represent graphic information in the virtual reality services provided by the first server; and
transmitting, from the first server to the first user, the object information including the transformed object.

10. The method of claim 7, further comprising:
receiving, at the first server from the second server, a message, voice, a moving picture, or data from a second user who uses the second server; and
transmitting, from the first server to the first user, the message, voice, moving picture, or data from the second user.

11. The method of claim 7, further comprising:
receiving, at the second server, a request from the second user to the first user who uses the first server for transmitting a message, voice, moving picture, or data;
requesting, from the second server to the first server, information of the first user;
receiving, at the second server from the first server, the information of the first user; and
transmitting the message, voice, moving picture, or data requested by the second user to the second server using the information of the first user.

12. A method for inter-operation between virtual reality services, the method comprising:
logging in a first server, one of a plurality of virtual reality servers in a client device of a first user using the plurality of virtual reality servers providing virtual reality services that are different from each other; and
transmitting information of the first user to the first server in the client device for the first server to authenticate a second server, one of the plurality of virtual reality servers, and the first user.

13. The method of claim 12, further comprising:
transmitting a message, voice, moving picture, or data sent from a second user who uses the second server to the first server in the client device.

14. The method of claim 12, further comprising:
receiving information of another user who uses the second server from the first server in the client device; and
directly transmitting the message, voice, moving picture, or data to the client device of the other user using the information of the other user in the client device.

15. A computer readable recording medium having embodied thereon a computer program for executing a method for inter-operation between virtual reality services, the method comprising:
performing mutual authentication between a first server and a second server from among a plurality of virtual reality servers providing virtual reality services that are different from each other;
requesting, by the second server, information of a first user from the first server;
receiving, by the second server, information of the first user from the first server; and
authenticating the first user as a user for sharing the virtual reality services in the first server using the information of the first user in the second server.

16. A computer readable recording medium having embodied thereon a computer program for executing a method for inter-operation between virtual reality services, the method comprising:
logging in a first server, one of a plurality of virtual reality servers in a client device of a first user using the plurality of virtual reality servers providing virtual reality services that are different from each other; and
transmitting information of the first user to the first server in the client device so as for the first server to authenticate a second server, one of the plurality of virtual reality servers, and the first user.
